**Europäisches Patentamt**

**European Patent Office**

**Office européen des brevets**

(19)

(11) **EP 1 197 888 A1**

(12) **EUROPEAN PATENT APPLICATION**

(43) Date of publication:
**17.04.2002 Bulletin 2002/16**

(51) Int Cl.$^7$: **G06F 17/60**

(21) Application number: **00122019.3**

(22) Date of filing: **10.10.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **Digital Rum Ltd.**
**London NW6 4BT (GB)**

(72) Inventors:
• **Radford, Peter, c/o Digital Rum Ltd.**
**London NW6 4BT (GB)**

• **Kalafatis, Ioannis, c/o Digital Rum Ltd.**
**London NW6 4BT (GB)**
• **van de Steen, Johan, c/o Digital Rum Ltd.**
**London NW6 4BT (GB)**

(74) Representative: **Preuss, Udo, Dipl.-Ing.**
**Maiwald Patentanwalts GmbH**
**Elisenhof**
**Elisenstrasse 3**
**80335 München (DE)**

(54) **Method and computer system for calculating a relative match value for a product offer**

(57) The invention refers to a method for calculating and displaying at least one offer of a vendor or manufacturer of a product, the method comprises at least two steps. In a first step, all product-related information of various sellers are collected using the information already existing on a database or procured through the global computer network - Internet. On the basis of this product-related information from various sellers, in a second step, for each offer for such a product a relative match value (RMV) is calculated taking into consideration at least two different product-related characteristics, for example the price and the delivery time. After calculating the relative match value for each offer, at least the offer with the best relative match value (RMV) is displayed to the user.

FIG. 1

## Description

### Technical Background

The invention refers to a method for calculating a relative match value of product offers from vendors or manufacturers offering their products via Internet or make data about their products available through the Internet, the relative match value being based on at least two product-related characteristics. The invention refers also to a computer program product comprising computer readable program means for performing the inventive method.

The invention refers especially to an interactive method and a computer system with which a user or customer can select between various degrees of significance factors for each product-related characteristic (also referred to product-related feature). Depending from the selected degrees of the significance factors the offers are differently weighted and the equation for calculating the relative match values is altered.

The invention relates also to a system for searching an electronic network, such as the Internet, for product information, and, more particularly, to a method and means by which a user or customer can quickly do a product search through databases on a global network and can get a relative match value for each product offer with a simple input that enables effective communication with a server adapted to widely seek and provide the information sought.

### Description of the Related Art

Global electronic and computer networks, such as the Internet, provide access to a tremendous amount of information relating to various companies and their products. It is, however, difficult for a user to investigate a particular product offer on a global computer network when the product is sold under more than one name, or when the user is not sure of the proper name of the product. Similarly, the user may not know who the manufacturer or local supplier of the product is. It can therefore be a quite time-consuming and complex procedure to do an effective product search through all of the web sites and database available that may contain pertinent information.

Against this background a lot of applications have been filed. For example WO 00/45302 discloses an interactive search system for use primarily with a global computer network, for example the Internet, using a product identifying barcode to rapidly and effectively obtain a supply of related information for presentation to a user. A computer may be used to input a barcode, taken from a package of advertisement or pre-stored in the computer to an implementing server on the network. The server contains a database of product and manufacturer identifying barcode codes and uses the input barcode code and the database to identify the manufacturer and his program to then perform a search of the network to locate sites relating to or operated by the manufacturer. The server may search the network on a product basis to locate other sites containing the barcode under search. When all of the selected product and manufacturer information has been searched and found, it will be collected and stored in a database memory at the user terminal, enabling the user to readily review all of the information found at one time at any time.

This known method provides the possibility of obtaining information and displaying the information the user wishes to know to a user or customer. However, all these product offers are not processed taking special user's wishes into account. Normally, the prior art methods and means display only a ranking list of the best prices offers, but nothing more.

### Summary of the Invention

It is an object of the present invention to provide a method and means to enable a better information set of the user or customer with respect to product offers of various sellers. It is a particular object of the invention to consider special wishes of a customer.

This object is met by a method having the features of claim 1 and a system according to claim 7. The computer program products according to claims 12 and 13 also solve these objects. The inventive method procures product-related information via the Internet and/or via at least one already existing database of a connected computer system. On the basis of these procured product-related data, a relative match value for each product offer found is created, the calculation of each relative match value takes into account at least two product-related characteristics, e.g. the price and the delivery time. After calculation of the relative match values for each product offer, at least the offer with the best relative match value is displayed to the customer.

In a preferred embodiment of the invention, the relative match value for each product offer is calculated according to the formula:

$$RMV = X - \alpha * d - \left(\frac{p}{p_c}\right)^{\beta}$$

wherein :

RMV = relative match value
X = upper limit (e.g. 100)
d = delivery time (in days)
p = price (currency)
$p_c$ = cheapest price (currency)
$\alpha$ = time delivery significance factor
$\beta$ = price significance factor

In another preferred embodiment of the invention, the relative match values are calculated according to the following formula:

$$RMV = X - \alpha * d - \left(\frac{p}{p_c}\right)^{\beta} - prox^{\left(\frac{1}{\gamma}\right)}$$

wherein :

$\gamma$ = proximity significance factor

In addition to the first equation, the second equation comprises a "proximity part". This proximity part considers the distance between the customer's actual location and the seller's location. As a skilled person may take from the equation, the maximum value is decreased the greater the distance between the location of the seller and the actual location of the customer is. This embodiment necessarily requires, for example, a GPS-System of which the data are made available to the calculation system or a method to locate the customer, e.g. via the wireless mobile phone. Such systems are already known per se.

The above-mentioned formula including the proximity part may be modified such that

$$prox^{\left(\frac{1}{\gamma}\right)} = 0 \quad \text{if} \quad d \le d_m$$

or the product is sent by mail,
wherein
$d_m = delivery\_time\_$max imum

The delivery time maximum is for example 10 days. If it is mail order then distance to vendor is not important. Hence, the proximity part is negligible and can be set to zero. The delivery significance factor $\alpha$ and the significance factor $\beta$ may be preset, for example $\alpha$ = 0,75 and $\beta$ = 7,5. However, it is also possible to provide an interactive system, wherein the user can select for each factor one of the following possibilities:

a) Essential (highest significance)
b) Crucial
c) Significant
d) Trivial (lowest significance)

Depending from the selected level for each significance factor the value of each significance factor is set. For example, if the user decides that a quick delivery is "crucial", the significance factor $\alpha$ has to be higher than for the case he selects that the significance factor is only "significant". The same applies for the other significance factors and $\beta$ and $\gamma$. In the following description of preferred embodiments, an example of a table including values for the various significance factors is shown. Hence, depending on the user's input, the delivery factor and/or the price factor and/or further significance factors are changed.

When the relative match values have been calculated, at least the offer with the best relative match value is displayed on a displaying means such as a mobile phone, especially a WAP mobile phone, or on a screen of a terminal or computer system.

As already mentioned above, the equation for calculating the relative match value includes at least two different significance factors, for example a delivery significance factor and a price significance factor. However, further significance factors can be incorporated by adding appropriate terms to the above-mentioned equations. In this respect, it is to be noted that the above-mentioned equations are only examples for calculating relative match values, a person skilled in the art may construe another equation with which the same basic idea is to be solved, such as a polynomial.

It is noted here that a domain (or category) of products is either "live" or "non-live" and never both. The distinction is made on the location of the price and delivery information :

- For a live domain, item price and delivery information resides on the Vendor's server.
- For a non-live domain, item price and delivery reside on the applicants server.

Finally, it is noted here that CPID is an abbreviation for canonical product identification.

**Brief description of the drawings**

In the following a more detailed description of various preferred embodiments of the invention is given with reference to the accompanying drawings, of which

Fig. 1    shows a schematic diagram of a commerce architecture
Fig. 2    shows a schematic user interface flow
Fig. 3    shows a flow diagram of a barcode search

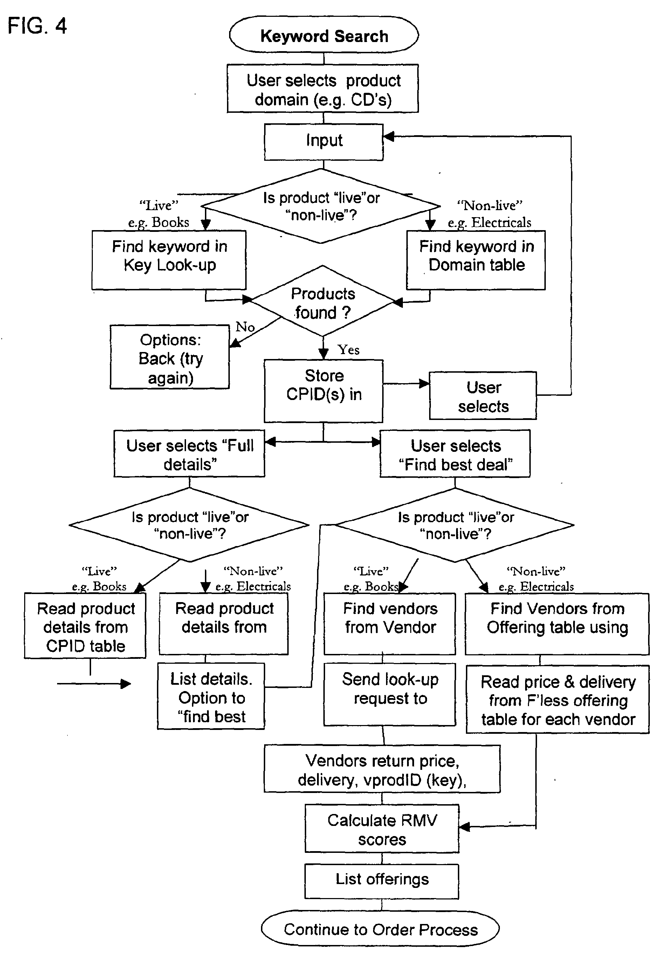

Fig. 4    shows a flow diagram of a keyword search, and

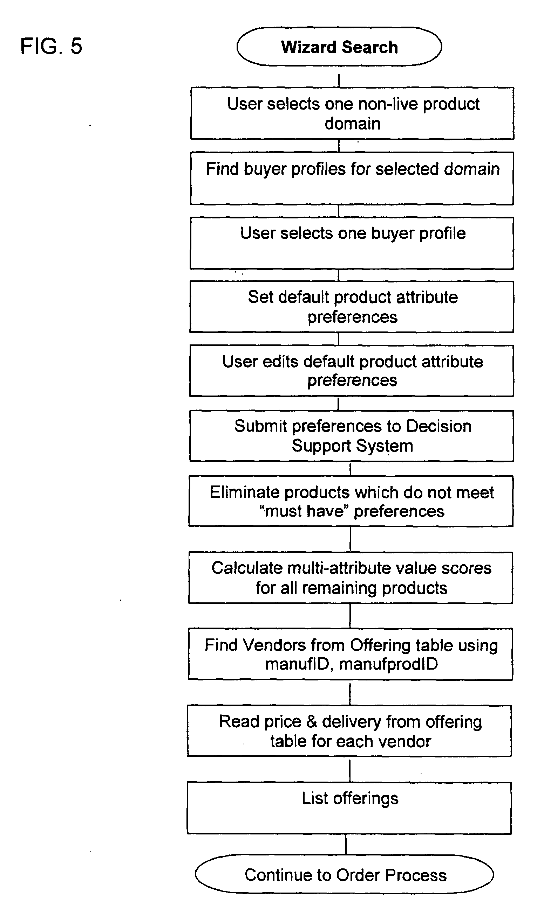

Fig. 5    shows a wizard search

**Description of preferred Embodiment of the Invention**

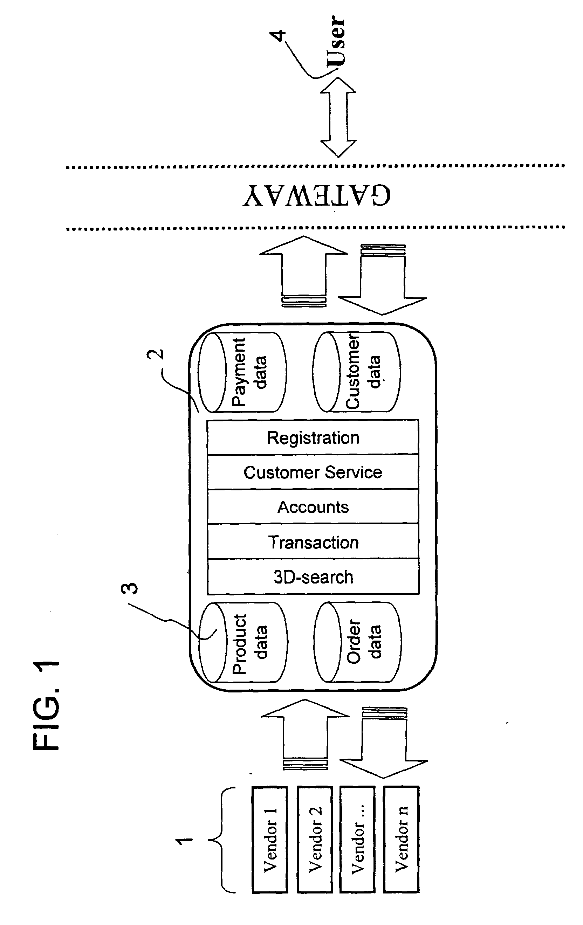

In accordance with the invention, as seen in Fig. 1, various vendors 1 provide information about their products to an implementing server 2. This implementing server 2 includes also a product database 3 including data from the vendors 1. This implementing server 2 includes also a so-called 3D search module including the calculation of a relative match value RMV. A user 4 is connectable to this implementing server 2. The user can use a wireless portable computer, a wireless Internet phone or mobile phone (e.g. a WAP-phone), a server accessible phone or a wireless organizer, etc.

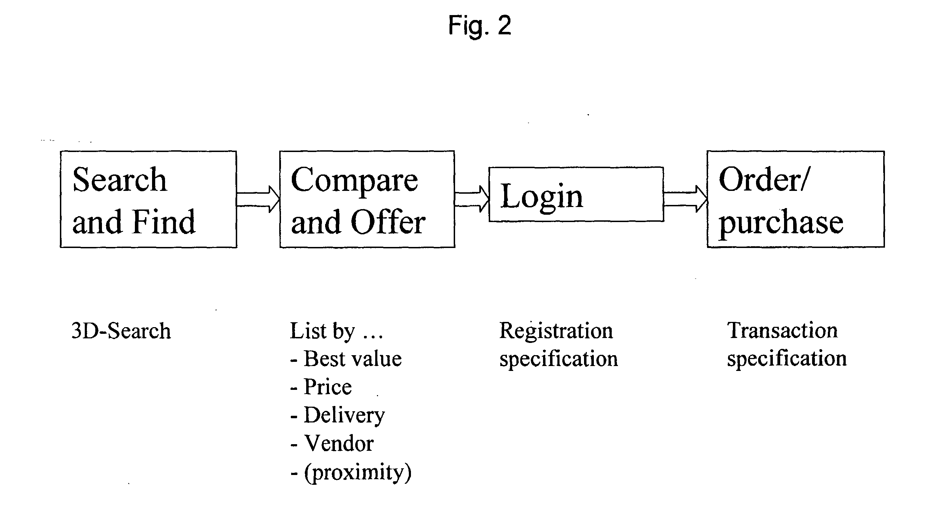

As shown in Fig. 2, the above-mentioned 3D search is done and then a list of the offers found is displayed to the user 4. The list can be arranged according to the best price, the best delivery or the chosen vendor or according to the inventive method arranged by the best relative match value. If the user 4 decides to avail of one offer, he will log into the system and (then) order the product.

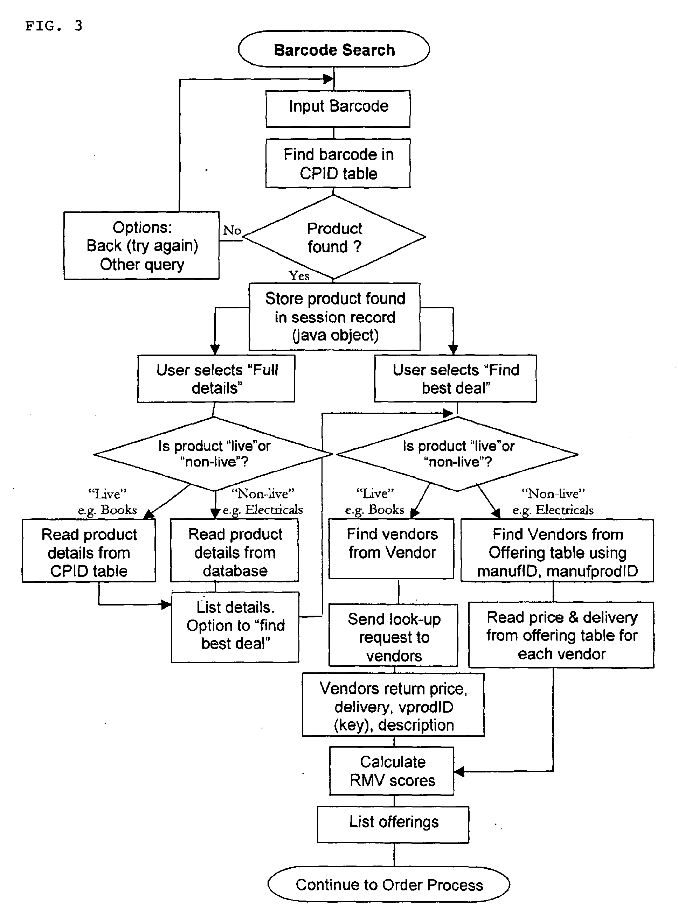

As shown in Fig. 3, a so-called barcode search comprises the following steps:

A user inputs the barcode of a product he is interested in. This barcode is compared with the barcodes in a CPID (canonical product identification) table. If the product is found, i.e. if the barcode is found, the user has the possibility of selecting "full details" or "find best deal". If the barcode is not found, i.e. the product does not exist according to the CPID table, the user is informed on the display accordingly. In this case, the user 4 can input another barcode.

If the user selects "full details", all the details derived from the CPID table or from a so-called frictionless offering table (program of the company Frictionless Commerce Incorporated) are listed on the display. Again, the user now has the option of choosing "find best deal". In this case, the price and delivery time for each offer from a vendor is selected from various databases, for example from the vendor table or from the frictionless offering table. On the basis of the price and the delivery time for each offer, the relative match value is calculated in accordance to the equation shown below. Then at least the offer with the best relative match value is displayed. The user now has the possibility of ordering this product, as mentioned before. The relative match value RMV is calculated in accordance to the following equation :

$$RMV = X - \alpha * d - \left(\frac{p}{p_c}\right)^{\beta}$$

wherein

$\alpha$ =    delivery significance factor
$\beta$ =    price significance factor
$d$ =    delivery (in days)

p =     item price

$p_c$ =     price of the cheapest offer

According to the above-mentioned equation, the price of the cheapest offer has to be determined first. The relative match value RMV can then be calculated. In a first embodiment of the invention, the delivery significance factor and the price significance factor are set on a fixed value, for example the delivery significance factor $\alpha$ = 0,75 and the price significance factor $\beta$ = 7,5.

However, in an alternative method according to the invention, the user can choose between one of the following possibilities:

    a) the price is essential
    b) the price is crucial
    c) the price is significant
    d) the price is trivial

Depending on the chosen possibility, the price significance factor is set. If the user has chosen the first possibility, the price significance factor is set to a value higher than the value determined for the possibility "the price is essential". If the user chooses the possibility "the price is crucial", the value for the price significance factor is set at a value lower than that for the possibility "the price is essential". The same applies to the delivery significance factor.

In the following, examples for such importance values is given:

|  | $\alpha$ | $\beta$ | Optional $\gamma$ |
|---|---|---|---|
| Essential | 2 | 20 | 0,25 |
| Crucial | 1 | 10 | 0,5 |
| Significant | 0,5 | 5 | 0,75 |
| Trivial | 0 | 0 | 1 |

However, it is also possible that a user can choose between only two possibilities, for example 1) "the price and/or the delivery time is significant", 2) "the price and/or the delivery time is trivial".

After the calculation of each relative match value for each offer, at least the offer with the best relative match value is shown on a display in front of the customer. It is preferred that this display is part of a WAP-mobile phone or a display of a different wireless communication device, such as an organizer including a modem or the like.

**Claims**

1. A method for calculating and displaying at least one offer of a vendor or manufacturer of a product, the method comprising the steps of:

    -    procuring product-related information via the Internet and/or via an already existing product database for each offer;
    -    calculating a relative match value (RMV) for each offer, taking into account at least two product-related characteristics;
    -    displaying at least the offer with the best relative match value (RMV) to a user.

2. A method according to claim 1, wherein said relative match value (RMV) of each offer is calculated taking into consideration the price and the delivery time of each product offer.

3. A method according to claim 1 or 2, wherein the relative match value (RMV) is calculated according to the formula:

$$RMV = X - \alpha * d - \left(\frac{p}{p_c}\right)^{\beta}$$

wherein:

RMV = relative match value
X = upper limit
d = delivery time (in days)
p = price (currency)
$p_c$ = cheapest price (currency)
$\alpha$ = time delivery significance factor
$\beta$ = price significance factor

4. A method according to claim 1 or 2, wherein the relative match value (RMV) is calculated according to the formula:

$$RMV = X - \alpha * d - \left(\frac{p}{p_c}\right)^{\beta} - prox^{\left(\frac{1}{\gamma}\right)}$$

wherein:

RMV = relative match value
X = upper limit
d = delivery time (in days)
p = price (currency)
$p_c$ = cheapest price (currency)
prox = proximity (distance user-deliverer in km)
$\alpha$ = time delivery significance factor
$\beta$ = price significance factor
$\gamma$ = proximity significance factor

5. A method according to claim 3 or 4, wherein $0 \leq \alpha$ and $0 \leq \beta$ and $0 < \gamma$.

6. A method according to claim 3 or 4, wherein $0 \leq \alpha \leq 2$ and $0 \leq \beta \leq 20$ and $0 < \gamma \leq 1$.

7. A method according to claim 3 or 4, wherein said significance factors ($\alpha$, $\beta$, $\gamma$) are selected from the following table:

| | $\alpha$ | $\beta$ | $\gamma$ |
|---|---|---|---|
| Extremely important | 2 | 20 | 0,25 |
| Very important | 1 | 10 | 0,5 |
| Quite important | 0,5 | 5 | 0,75 |
| Not important | 0 | 0 | 1 |

8. A computer system for calculating and displaying relative match values (RMV) relating to product offers, said system comprising:

- an implementing server coupled to a global computer network and comprising database means for storing product-related information and associated information on where further product-related information can be located on the global computer network, and
- means for collecting offers from offerers for a product on the basis of said product-related information of said database means and said associated information;
- means for calculating a relative match value (RMV) for each of said offers on the basis of at least two product characteristics;
- means for displaying at least the offer with the best relative match value (RMV) calculated by that means for calculating a relative match value (RMV).

9. A computer system according to claim 8, wherein said means for calculating a relative match value (RMV) for each offer calculates the relative match value (RMV) according to the following formula:

$$RMV = X - \alpha * d - \left(\frac{p}{p_c}\right)^{\beta}$$

wherein:

RMV = relative match value
X = upper limit
d = delivery time (in days)
p = price (currency)
$p_c$ = cheapest price (currency)
$\alpha$ = time delivery significance factor
$\beta$ = price significance factor

10. A computer system according to claim 8, wherein said means for calculating a relative match value (RMV) for each offer calculates the relative match value (RMV) according to the following formula:

$$RMV = X - \alpha * d - \left(\frac{p}{p_c}\right)^{\beta} - prox^{\left(\frac{1}{\gamma}\right)}$$

wherein:

RMV = relative match value
X = upper limit
d = delivery time (in days)
p = price (currency)
$p_c$ = cheapest price (currency)
prox = proximity (distance user-deliverer in km)
$\alpha$ = time delivery significance factor
$\beta$ = price significance factor
$\gamma$ = proximity significance factor

11. A computer system according to claim 8, wherein said means for displaying is part of a computer terminal coupled to said implementing server or a mobile input unit, such as a mobile phone, especially a WAP mobile phone or a WAP mobile organizer.

12. A computer program product directly loadable into the internal memory of a digital computer, comprising software code portions for performing the steps of one of the claims 1 to 7 when said program is running on a computer.

13. A computer program product stored on a computer usable medium for a method for calculating at least one offer of a vendor or manufacturer of a product, the computer program product comprising:

- computer readable program means for procuring product-related information via the Internet and/or via an already existing product database for each offer;
- computer readable program means for calculating a relative match value (RMV) for each offer, taking into account at least two product-related characteristics; and

14. A computer program product according to claim 13, wherein the computer program product comprises computer readable program means for displaying at least the offer with the best relative match value (RMV) to a user.

7

FIG. 1

User

GATEWAY

Payment data

Customer data

Registration

Customer Service

Accounts

Transaction

3D-search

Product data

Order data

Vendor 1

Vendor 2

Vendor ...

Vendor n

1

2

3

4

## Fig. 2

| Search and Find | → | Compare and Offer | → | Login | → | Order/ purchase |
|---|---|---|---|---|---|---|

| | | | |
|---|---|---|---|
| 3D-Search | List by ...<br>- Best value<br>- Price<br>- Delivery<br>- Vendor<br>- (proximity) | Registration specification | Transaction specification |

EP 1 197 888 A1

FIG. 3

```
                    ( Barcode Search )
                            │
                    ┌───────────────┐
                    │ Input Barcode │
                    └───────────────┘
                            │
                    ┌───────────────┐
                    │ Find barcode in│
                    │   CPID table   │
                    └───────────────┘
                            │
  ┌──────────────┐    No  ╱ Product ╲
  │ Options:     │◄───────  found ?
  │ Back (try again)      ╲         ╱
  │ Other query  │           │ Yes
  └──────────────┘    ┌──────────────────┐
        ▲             │ Store product found│
        │             │ in session record  │
        │             │   (java object)     │
        │             └──────────────────┘
```

**Store product found in session record (java object)**

**User selects "Full details"** — **User selects "Find best deal"**

Is product "live" or "non-live"? — Is product "live" or "non-live"?

"Live" e.g. Books — "Non-live" e.g. Electricals — "Live" e.g. Books — "Non-live" e.g. Electricals

**Read product details from CPID table** — **Read product details from database** — **Find vendors from Vendor** — **Find Vendors from Offering table using manufID, manufprodID**

**List details. Option to "find best deal"**

**Send look-up request to vendors** — **Read price & delivery from offering table for each vendor**

**Vendors return price, delivery, vprodID (key), description**

**Calculate RMV scores**

**List offerings**

( Continue to Order Process )

## FIG. 4

```
                    ( Keyword Search )
                            │
            ┌───────────────────────────────┐
            │ User selects product          │
            │ domain (e.g. CD's)            │
            └───────────────────────────────┘
                            │
                    ┌───────────────┐ ◄──────────────────────┐
                    │     Input     │                         │
                    └───────────────┘                         │
                            │                                 │
         "Live"      ╱ Is product "live"or ╲    "Non-live"    │
       e.g. Books   ◄   "non-live"?         ►  e.g. Electricals
            │         ╲                   ╱         │          │
    ┌──────────────┐                        ┌──────────────┐   │
    │ Find keyword │                        │ Find keyword │   │
    │ in Key       │                        │ in Domain    │   │
    │ Look-up      │                        │ table        │   │
    └──────────────┘                        └──────────────┘   │
            │           ╱ Products ╲             │             │
            └────────► ◄  found ?   ► ◄──────────┘             │
                        ╲         ╱                            │
     ┌──────────┐   No  │         │ Yes                        │
     │ Options: │ ◄─────┘         ▼                            │
     │ Back (try│        ┌───────────────┐    ┌──────────┐     │
     │ again)   │        │    Store      │───►│  User    │─────┘
     └──────────┘        │  CPID(s) in   │    │ selects  │
                         └───────────────┘    └──────────┘
            ┌────────────────┐ ◄──────► ┌─────────────────┐
            │ User selects   │          │ User selects    │
            │ "Full details" │          │ "Find best deal"│
            └────────────────┘          └─────────────────┘
                    │                           │
      ╱ Is product "live"or ╲      ╱ Is product "live"or ╲
      ◄   "non-live"?        ►     ◄   "non-live"?        ►
       ╲                   ╱        ╲                   ╱
   "Live"       "Non-live"      "Live"        "Non-live"
  e.g. Books   e.g. Electricals e.g. Books   e.g. Electricals
     │             │               │              │
┌──────────┐ ┌──────────┐  ┌──────────────┐ ┌──────────────────┐
│ Read     │ │ Read     │  │ Find vendors │ │ Find Vendors from│
│ product  │ │ product  │  │ from Vendor  │ │ Offering table   │
│ details  │ │ details  │  └──────────────┘ │ using            │
│ from CPID│ │ from     │        │          └──────────────────┘
│ table    │ └──────────┘  ┌──────────────┐         │
└──────────┘ ┌──────────┐  │ Send look-up │ ┌──────────────────┐
     │       │ List     │  │ request to   │ │ Read price &     │
     └─────► │ details. │  └──────────────┘ │ delivery from    │
             │ Option to│        │          │ F'less offering  │
             │ "find    │        │          │ table for each   │
             │ best     │        │          │ vendor           │
             └──────────┘        │          └──────────────────┘
                          ┌────────────────────┐       │
                          │ Vendors return      │       │
                          │ price, delivery,    │       │
                          │ vprodID (key),      │       │
                          └────────────────────┘       │
                          ┌────────────────┐            │
                          │ Calculate RMV  │ ◄──────────┘
                          │ scores         │
                          └────────────────┘
                          ┌────────────────┐
                          │ List offerings │
                          └────────────────┘
                                  │
                    ( Continue to Order Process )
```

FIG. 5

( **Wizard Search** )

User selects one non-live product domain

Find buyer profiles for selected domain

User selects one buyer profile

Set default product attribute preferences

User edits default product attribute preferences

Submit preferences to Decision Support System

Eliminate products which do not meet "must have" preferences

Calculate multi-attribute value scores for all remaining products

Find Vendors from Offering table using manufID, manufprodID

Read price & delivery from offering table for each vendor

List offerings

( Continue to Order Process )

**European Patent Office**

**EUROPEAN SEARCH REPORT**

Application Number

EP 00 12 2019

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | KETCHPEL S P ET AL: "Competitive sourcing for Internet commerce" PROCEEDINGS OF 18TH INTERNATIONAL CONFERENCE ON DISTRIBUTED COMPUTING SYSTEMS (CAT. NO.98CB36183), AMSTERDAM, NETHERLANDS, 26-29 MAY 1998, 26 - 29 May 1998, pages 602-611, XP002166237 1998, Los Alamitos, CA, USA, IEEE Comput. Soc, USA ISBN: 0-8186-8292-2 * page 602, column 1, line 1 - line 28 * * page 603, column 1, line 1 - line 9 * * page 605, column 2, line 17 - page 606, column 2, line 2 * | 1-9, 11-14 | G06F17/60 |
| A | WO 99 66738 A (MUREX SECURITIES LTD ;MOORE GEORGE G (US); SHAFFER JAMES D (US)) 23 December 1999 (1999-12-23) * page 9, line 18 - line 24 * | 1-9, 11-14 | |
| A | WO 99 54836 A (CAMBRIDGE CONSULTANTS ;MARTIN SEAN CHRISTOPHER (GB); SHARP DAVID W) 28 October 1999 (1999-10-28) * claims 1,2 * | 1-9, 11-14 | TECHNICAL FIELDS SEARCHED (Int.Cl.7) G06F |
| A | US 5 717 865 A (STRATMANN WILLIAM C) 10 February 1998 (1998-02-10) * figures 5,6 * | 1-9, 11-14 | |
| A | WO 00 45319 A (ONLINE INSIGHT INC) 3 August 2000 (2000-08-03) * abstract * * figures 11,12 * | 1-9, 11-14 | |

-/--

The present search report has been drawn up for all claims

| Place of search | Date of completion of the search | Examiner |
|---|---|---|
| THE HAGUE | 27 April 2001 | Pedersen, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 00 12 2019

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | FR 2 778 995 A (TAILLENS JEAN FRANCOIS) 26 November 1999 (1999-11-26) * abstract * * claims 6,7 * | 1-9, 11-14 | |

TECHNICAL FIELDS
SEARCHED (Int.Cl.7)

The present search report has been drawn up for all claims

| Place of search | Date of completion of the search | Examiner |
|---|---|---|
| THE HAGUE | 27 April 2001 | Pedersen, N |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 00 12 2019

This annex lists the patent family membersrelating to the patent documents cited in the above-mentioned European search report.
The members are as contained in the European Patent Office EDP file on
The European Patent Office is in no way liable for these particulars which are merely given for the purpose of information.

27-04-2001

| Patent document cited in search report | | Publication date | Patent family member(s) | | Publication date |
|---|---|---|---|---|---|
| WO 9966738 | A | 23-12-1999 | AU<br>EP<br>NO | 4825299 A<br>1088457 A<br>20006379 A | 05-01-2000<br>04-04-2001<br>19-02-2001 |
| WO 9954836 | A | 28-10-1999 | EP | 1073981 A | 07-02-2001 |
| US 5717865 | A | 10-02-1998 | NONE | | |
| WO 0045319 | A | 03-08-2000 | AU | 2744400 A | 18-08-2000 |
| FR 2778995 | A | 26-11-1999 | AU<br>EP<br>WO | 3715199 A<br>1080437 A<br>9960499 A | 06-12-1999<br>07-03-2001<br>25-11-1999 |

EPO FORM P0459

For more details about this annex : see Official Journal of the European Patent Office, No. 12/82